(19) Europäisches Patentamt
European Patent Office
Office européen des brevets

(11) **EP 3 504 524 B1**

(12) **EUROPEAN PATENT SPECIFICATION**

(45) Date of publication and mention of the grant of the patent:
**07.04.2021 Bulletin 2021/14**

(21) Application number: **17845666.1**

(22) Date of filing: **28.08.2017**

(51) Int Cl.:
*G01H 9/00* *(2006.01)*    *G01B 9/02* *(2006.01)*

(86) International application number:
**PCT/IL2017/050957**

(87) International publication number:
**WO 2018/042424 (08.03.2018 Gazette 2018/10)**

(54) **OPTICAL DETECTION OF VIBRATIONS**

OPTISCHE DETEKTION VON VIBRATIONEN

DÉTECTION OPTIQUE DE VIBRATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2016 IL 24754116**

(43) Date of publication of application:
**03.07.2019 Bulletin 2019/27**

(73) Proprietor: **Elbit Systems Land and C4I Ltd.**
**4250705 Natanya (IL)**

(72) Inventors:
 • **LEIZERSON, Ilya**
  **4250705 Netanya (IL)**
 • **NUSSINSON, Dan**
  **4250705 Netanya (IL)**

(74) Representative: **Pearl Cohen Zedek Latzer Baratz UK LLP**
**The Gridiron Building**
**One Pancras Square**
**London N1C 4AG (GB)**

(56) References cited:
**EP-A1- 0 907 875      WO-A1-98/38476**
**CN-A- 104 776 907      CN-A- 104 819 769**
**US-A- 4 979 818      US-A1- 2005 160 822**
**US-A1- 2006 209 631      US-A1- 2008 043 233**
**US-A1- 2009 251 706**

 • **BABAIE, G. ET AL.: 'Dynamic range enhancement imaging in laser interferometry' MEASUREMENT SCIENCE AND TECHNOLOGY vol. 26, no. 1, 2014, page 015202, XP020276358**

**Description**

BACKGROUND OF THE INVENTION

1. TECHNICAL FIELD

The present invention relates to the field of vibration sensing, and more particularly, to imaging of vibrations.

2. DISCUSSION OF RELATED ART

Remote sensing of small vibrational motion using speckle interferometry is a well-known and demonstrated method (see e.g., Zalevsky et al. 2009, Simultaneous remote extraction of multiple speech sources and heart beats from secondary speckles pattern, Optics express 17(24): 21566-21580). In this method a camera is used to capture the speckle pattern formed by the scattering of coherent light (usually a laser) from a diffusive target. In order to achieve high gain the camera is focused on a plane (focus plane) which is far from the target position. Small tilt variations of the target are expressed by a translational motion of the speckle pattern at the imaging plane. The translation distance is proportional to the target's tilt angle change between consecutive frames and the distance between the target and the focus plane. Other methods arc found, for example, in US 2005/160822, WO 98/38476, and US 2006/209631.

Laser speckle interferometry may be employed for detecting vibrations, by directing the laser beam toward the interrogated object surface or a point in the scene. The incident laser beam diffusively reflects therefrom. The scattering of different portions of the light beam from the rough surface results in a random shift of the phases of the portions of the corresponding light waves and a random distribution of the intensities thereof. Consequently, the beam portions scattered from different surface portions interfere with each other, resulting in a light distribution with varying intensity in space. The random variations in the intensity constitute a speckle pattern for each light beam. An imager acquires images of the reflection of the laser beam from the surface, which include speckle patterns. The shift of the speckle patterns between subsequent images can be related to the vibrations of the small surface part and thus to reconstruction of motion and vibrations.

The following is a simplified summary providing an initial understanding of the invention. The summary does not necessarily identify key elements nor limit the scope of the invention, but merely serves as an introduction to the following description.

The invention provides a system for imaging vibrations in a scene according to claim 1, and a method of imaging vibrations in a scene according to claim 8.

These, additional, and/or other aspects and/or advantages of the present invention are set forth in the detailed description which follows; possibly inferable from the detailed description; and/or learnable by practice of the present invention.

BRIEF DESCRIPTION OF THE DRAWINGS

For a better understanding of embodiments of the invention and to show how the same may be carried into effect, reference will now be made, purely by way of example, to the accompanying drawings in which like numerals designate corresponding elements or sections throughout.

In the accompanying drawings:

**Figures 1A** and **1B** are high level schematic illustrations of a system, according to some embodiments of the invention.

**Figures 2A** and **2B** are high level schematic illustrations of the difference in operation principle between prior art speckle interferometry and some embodiments of the present invention, respectively.

**Figure 3** is an exemplary illustration of the efficiency of the system and method, according to some embodiments of the invention.

**Figure 4** is a high level schematic illustration of a mask, according to some embodiments of the invention.

**Figure 5** is an exemplary illustration of simulation and experimental results concerning the effectivity and configuration of the mask, according to some embodiments of the invention.

**Figure 6** is a high level list illustrating stages of a method, according to some embodiments of the invention.

DETAILED DESCRIPTION OF THE INVENTION

In the following description, various aspects of the present invention are described. For purposes of explanation, specific configurations and details are set forth in order to provide a thorough understanding of the present invention.

Furthermore, well known features may have been omitted or simplified in order not to obscure the present invention. With specific reference to the drawings, it is stressed that the particulars shown are by way of example and for purposes of illustrative discussion of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

Unless specifically stated otherwise, as apparent from the following discussions, it is appreciated that throughout the specification discussions utilizing terms such as "processing", "computing", "calculating", "determining", "enhancing" or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices. Any of the disclosed modules or units may be at least partially implemented by a computer processor.

Embodiments of the present invention advantageously produce a map of vibration amplitudes, temporal frequencies and other temporal characteristics on the entire field of view (FOV) of the camera, to provide simultaneous information on the entire FOV and eliminate the need to scan the target.

Systems and methods are provided for sensing of vibrations in an entire scene, to yield quantitative measurements of motions and vibrations in the scene and to their reconstruction. Systems comprise at least one coherent light source configured to illuminate the scene, an optical unit configured to focus scattered light from the scene onto a pixelated detector, the detector configured to provide pixel intensity signals, and a processing unit configured to analyze the pixel intensity signals over the pixels of the detector to derive a vibration spectrum of elements in the scene that correspond to the pixels. The signal modulation at each pixel is used to indicate the vibrations of the scene element(s) that corresponds to the pixel(s). Vibration information concerning the scene may be used to direct other methods of vibration measurements, such as speckle interferometry, according to derived vibration images of the scene.

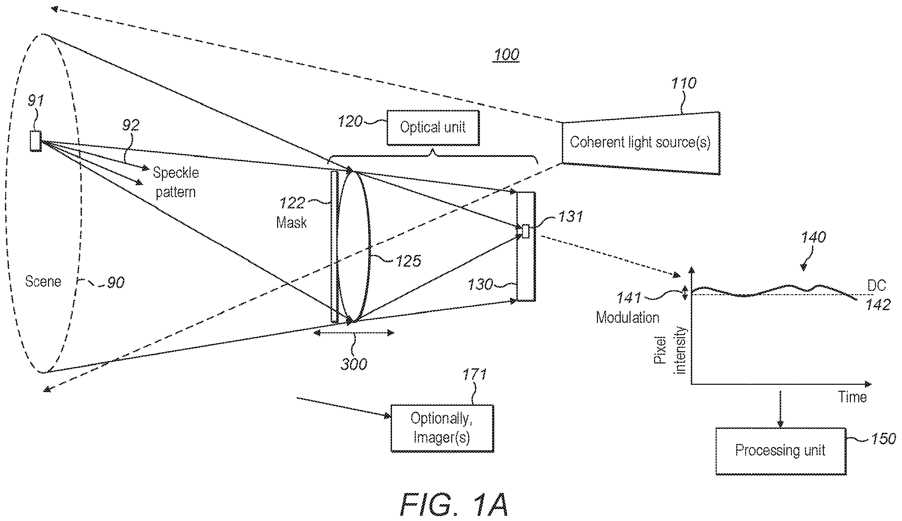

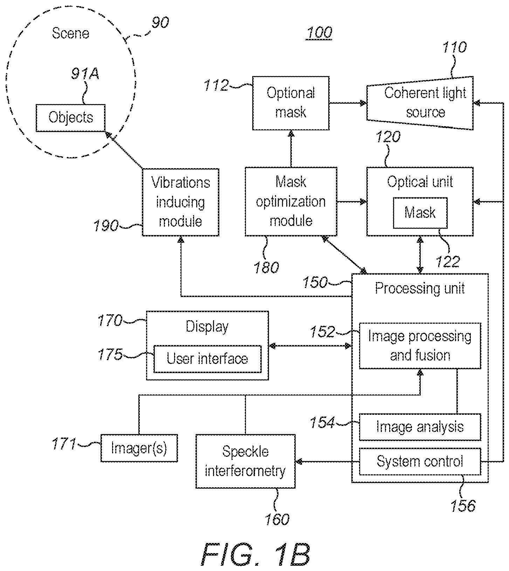

**Figures 1A** and **1B** are high level schematic illustrations of a system **100,** according to some embodiments of the invention. **Figure 1B** extends schematically **Figure 1A,** and system **100** may comprise any operable combination of elements from **Figures 1A** and **1B.** System **100** comprises at least one coherent light source **110** (e.g., one or more lasers) configured to illuminate a scene **90,** an optical unit **120,** having optical element(s) **125,** configured to focus scattered light from scene **90** onto a pixelated detector **130,** which is configured to provide pixel intensity signals, and a processing unit **150** configured to analyze the pixel intensity signals **140** over pixels **131** of detector **130** to derive a vibration spectrum of elements **91** in scene **90** that correspond to pixels **131** (by the focusing and according to system parameters). Analysis of pixel intensity signals **140** may be carried out by various methods, e.g., applying Fourier transforms (e.g., FFT - fast Fourier transform), wavelet analyzes, deriving spectrograms, etc.

Coherent light source **110** may be configured to illuminate the whole scene **90,** and may be a wide angle illuminator and/or may use an optical system (not shown) to direct the coherent illumination at selected scene **90,** possibly at different distances from coherent light source **110.** For example, coherent light source **110** may comprise a laser. It is noted that multiple coherent light sources **110** may be used to illuminate scene **90,** possibly at different wavelengths, and optical unit **120** may be configured accordingly to operate at different wavelengths.

Elements **91,** which may represent a part of a rough surface, typically scatter the coherent illumination to form the speckle patterns **92.** Area **91** may be considered as being observed by a particular corresponding camera pixel **131** (IFOV). Elements **91** may comprise objects, object surfaces and generally any part of the scene which is focused onto pixel **131** of detector **130,** i.e., the sizes of elements **91** may vary according to parameters of optical unit **120,** distance of scene **90** therefrom etc. Scattered speckle pattern **92** moves upon vibrations of or in element **91** and therefore speckle pattern **92** from each vibrating element **91** varies over time.

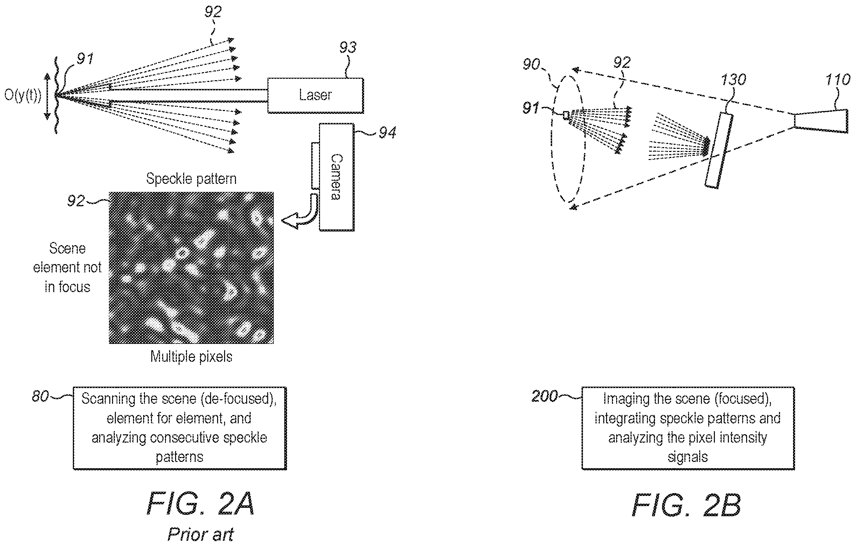

In optical unit **120,** one or more optical element **125** is configured to focus scattered light from scene **90** onto detector **130,** i.e., focus scattered light (with speckle patterns **92,** see e.g., an illustration of a speckle pattern in **Figure 2A** below) from multiple elements **91** onto respective multiple pixels **131.** Optical elements **125** and their dimensions and stops define the aperture stop dimension and its position. In case of a single lens, for example, the aperture stop position is the same as the lens aperture. Optical element(s) **125** may be positioned at the pupil (Fourier) plane of optical unit **120** and focus the scene image onto detector **130** at the field plane of optical unit **120.** Optical unit **120** therefore integrates speckle pattern **92** from each scene element **91** onto pixel **131** to provide one intensity value at any time, which may change over time to yield pixel intensity signal **140.** Changes in the intensity value in each pixel **131** result mainly from the movements of speckle patterns **92** due to element vibration. The intensity value fluctuations (in any of pixels **131**) correspond to speckle pattern elements entering and exiting the borders of the aperture stop due to the speckle pattern movements - only regions close to the aperture stop border contribute to the signal variation with time, as the part of the speckle pattern which is internal in the aperture stop area does not contribute to the total intensity variation with time.

Pixel intensity signal **140** in each pixel **131** typically comprises a DC component **142** (average signal intensity) and a modulation components **141** reflecting the changes due to the movements of speckle pattern **92.** The inventors have found out that analyzing pixel intensity signals **140** over pixels **131** may provide information about the vibrations of elements **91** in scene **90.**

Processing unit **150** is configured to analyze pixel intensity signals **140** over pixels **131** of detector **130** and may be further configured to identify locations (e.g., one or more scene element **91**) in scene **90** that correspond to pixels **131** having specified characteristics of respective pixel intensity signals **140** or other temporal characteristics. For example, the analysis may be used to indicate vibrating objects in scene **90** such as cars, machines, people etc.

In operation, a camera (as an example of optical unit **120**) may be focused on the target plain (scene **90**), and the illumination spot of illuminator **110** may be broadened to the entire FOV of the camera or part of it to produce a focused image of the target plane. The image quality is slightly impaired by the speckled effect of the coherent illumination. The intensity of each pixel is related to the total intensity of the speckle pattern on the aperture stop of optical unit **120,** formed by scattering of the coherent light from the pixel's instantaneous field of view (IFOV). Tilt vibrations or other motions of element **91** may result in translations of the speckle pattern **92** on the aperture stop, thus introducing small variations in the pixel's intensity on detector **130.** By recording a video of scene **90** and performing frequency analysis of pixel intensity signals **140** of each pixel **131,** regions in scene **90** may be differentiated according to pixel intensity signals characteristics, such as vibration spectra, vibration amplitude thresholds etc. Since the pixel intensity variation is produced only by speckles on the aperture stop perimeter, the sensitivity of system **100** may be enhanced by introducing mask(s) on the aperture stop.

Optical unit **120** further comprises a spatially patterned mask **122** configured to enhance fluctuations of the pixel intensity signals and to increase a ratio between modulation **141** and DC **142.** As the pixel intensity signal fluctuations are due to speckle pattern elements entering and exiting the edges of pixel **131,** using mask **122** that increases the amount of edges on the aperture stop can, at certain configurations, increase the modulation **141** with respect to DC signal **142.**

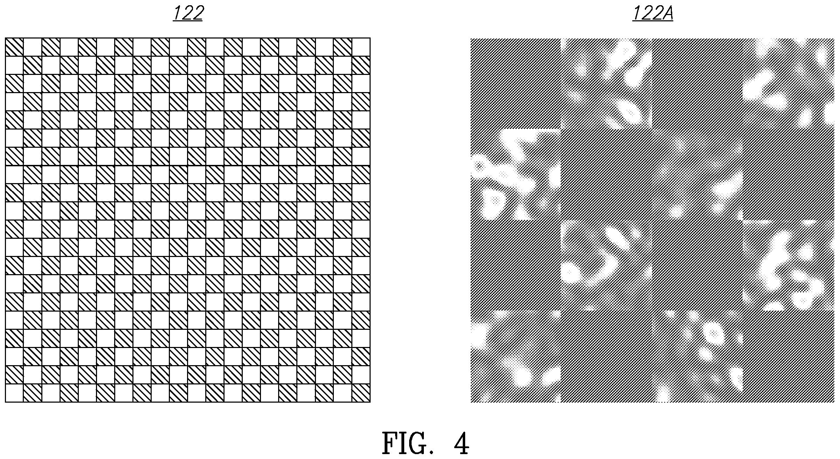

Processing unit **150** is further configured to optimize the spatial pattern of mask **122** according to specified criteria, for example, geometrical features of mask **122** and/or features size and density may be modified according to estimates speckle dimensions. Mask **122** may be optimized at a setup stage and/or in real-time, by processing unit **150** and/or by an external processor. Examples for the effects of various masks **122** are presented below (see **Figure 4).** System **100** may further comprise a mask optimization module **180 (Fig IB),** e.g., associated with processing unit **150.** Mask optimization module **180** is configured to optimize the mask configuration with respect to estimated speckle size, resulting modulation and DC. Mask optimization may relate to the general type of mask, to the horizontal and vertical cell sizes of the mask and/or to mask pitch. Mask optimization module **180** may be configured to alter mask **122** and compare results from processing unit **150** to perform the mask optimization.

Processing unit **150** is further configured to analyze pixel intensity signals **140,** e.g., by performing a Fourier transform thereof to the frequency domain, and analyzing temporal and frequency characteristics of the pixel intensity signals. Processing unit **150** is configured to derive vibration spectra of elements **91** according to the analyzed temporal and frequency characteristics, yielding a vibration spectrum for each element which corresponds to one or more pixels.

Processing unit **150** may be further configured to identify at least one interesting event in scene **90** according to the analyzed temporal and frequency characteristics. In certain embodiments, system **100** may be further configured to perform speckle interferometry **160** (**Figure 1B,** shown schematically) with respect to specified locations in scene **90,** e.g., particular locations which were identified as suspicious according to analyzed pixel intensity signals **140.** System **100** may comprise a zoom module configured to magnify any identified element **91** to have parts of it imaged by multiple pixels **131.**

Optical unit **120** may be further configured, upon a specified condition, to perform imaging in a de-focus regime of the scattered light, by moving optical element **125.** Processing unit **150** may be further configured to perform speckle interferometry **160,** to analyze shift(s) between consecutive images in a sequence of captured images and to relate the shift(s) between the images to motion of elements **91.** De-focusing may be carried out by moving optical element(s) **125** to a position in which detector **130** is optically coupled to a plane which is out of the object plane, as described e.g., in Zalevsky et al. 2009 (cited above).

In the de-focus regime, the speckle pattern, which is created on the detector plane, is related to the rough object surface and its shape, to the optical parameters of the system, to the distances etc. The target surface acts as a diffusive reflector and the speckle pattern arises from the interference of the diffused scattered waves. The mean size of bright regions (known as speckles) is controlled by the beam diameter on the target (denoted D), on the optical wavelength (denoted $\lambda$), on distance between the object and the plane of imaging (denoted Z) and on the optical magnification (denoted M) of the optical system **120,** according to **Equation 1:**

$$2\rho_{speckle} = 2M\frac{\lambda \cdot Z}{D} \quad \textbf{Equation 1}$$

This pattern propagates over free space to receiving optical system 120, where it is detected on detector 130. The speckle pattern is sensitive both to the in-plane surface displacements as well as to the out-of-plane surface tilts. The object vibration waves cause the speckle pattern to be displaced slightly without destroying the overall speckle pattern. Using cross-correlation tools between sequential frames the tilt velocity or the displacement of the object surface may be measured and the tiny vibrations on the target may be correspondingly reconstructed.

As illustrated schematically in **Figures 1A** and **1B,** system **100** may comprise one or more additional imager(s) **171,** e.g., in various electromagnetic spectrum ranges such as IR (infrared), visible, millimeter range etc. Received images from imager(s) **171** may be fused with the temporal vibration information derived by the disclosed technique. For example, an image processing and fusion module in processing unit **150** may be configured to fuse images derived from analyzed pixel intensity signals **140** with images from imager(s) **171.**

System **100** may further comprise a display **170** configured to display the derived information, in any of a number of modes such as (i) an indication of the temporal characteristics at each pixel, (ii) the intensity of modulation **141** at each pixels, (iii) the dominant frequency at each pixel, (iv) a representation of the frequency spectrum at each pixel, any modification thereof and/or integration with corresponding visual or infrared images. System **100** may further comprise a user interface **175** configured to provide the user with enhanced information such as more detailed information concerning the frequency spectra relating to certain pixels, pixel groups, element(s) **91** and/or objects in scene **90,** such as detailed frequency spectra, analysis of intensities at different spectra and/or speckle interferometry results. User interface **175** may be configured to receive user input concerning interesting regions of objects to which more detailed measurements and analysis may be directed. User interface **175** may be a graphical user interface (GUI) enabling the user to manipulate images and image parts, and provide additional information concerning the images. Processing unit **150** may comprise image processing capabilities, e.g., in an image analysis module **154,** for detecting objects and characterizing them according to the derived temporal characteristics and/or frequency spectra. System **100** may further comprise a vibrations inducing module **190** configured to induce vibrations in one or more object(s) **91A** in scene **90** (e.g., mechanically), and processing unit **150** may be further configured to detect the object(s)'s reactions to the induced vibrations by vibrations inducing module **190.** Active vibrations inducing module **190** may be configured to apply vibrations in at least one object or object part in the scene and processing unit **150** may be configured to correlate derived vibration characteristics (e.g., spectrum) from analyzed pixel intensity signals **140** with characteristics of the induced vibrations.

Various parameters of system **100** may be modified or adapted to increase a ratio between modulation **141** of the pixel intensity signals and DC **142** thereof. For example, spatially patterned mask **122** may be modified accordingly, at a setup stage and/or in real-time. Processing unit **150** may further comprise a system control module **156** configured to modify, optimize and/or adapt system parameters such as light source parameters and optical unit parameters to optimize the detection and imaging capabilities of system **100.** For example, system control module **156** may optimize the modulation to DC ratio, optimize masks, optimize a scanning pattern for speckle interferometry **160,** optimize the activation of vibrations inducing module etc.

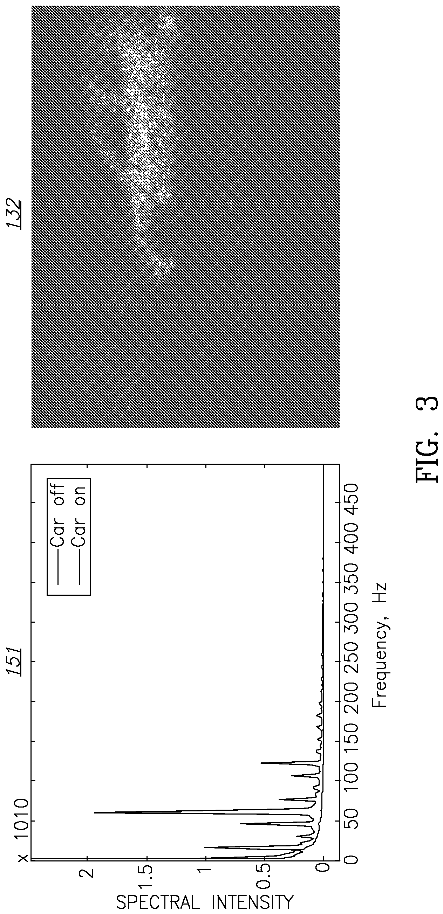

Image processing and fusion module **152** may be configured to provide a vibrations image of the scene (see example in **Figure 3**), based on the derived temporal spectra and, possibly simultaneously, speckle interferometry data concerning specific points in the scene; and system control **156** may be configured to scanning a plurality of points in the scene and applying speckle interferometry thereto, according to vibrations characteristics derived concurrently from the vibrations' image. Image processing and fusion module **152** may be configured to use the speckle interferometry data to improve the vibrations' image and/or possibly fusing the vibrations image based on the derived temporal spectra with a visual range or infrared image **171** of the scene. Processing unit **150** may be configured to compare or correlate the vibration data from different parts of at least one object in the scene to characterize a vibration pattern of the at least one object and optionally identify the at least one object according to the characterized vibration patterns across a surface of the at least one object. The vibration patterns may be passively measured as described above (using temporal and possibly frequency characteristics) and/or augmented by speckle interferometry data and/or active stimulation.

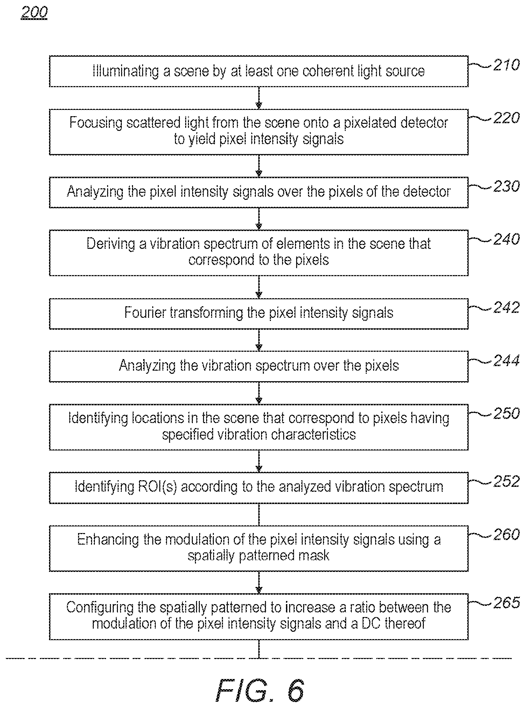

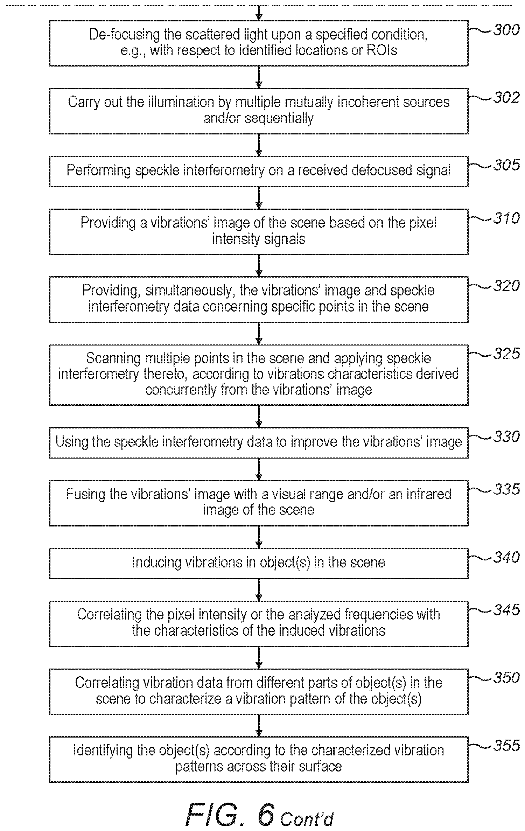

**Figures 2A** and **2B** are high level schematic illustrations of the difference in operation principle between prior art speckle interferometry and some embodiments of the present invention, respectively. Prior art speckle interferometry (**Figure 2A**) point-illuminated scene element **91** by a laser **93,** collects scattered speckle pattern **92** on de-focused camera detector **94** and analyses a displacement between consecutive speckle patterns **92.** While prior art speckle interferometry may provide data concerning the vibrations and motions of objects (marked as $O(y(t))$, it requires scanning the scene and analyzes the de-focused speckle patterns (**80**). In contrast, system **100** employs area illumination of scene **90,** illuminating multiple scene elements **91** simultaneously and integrates speckle patterns **92** from corresponding scene elements **91** simultaneously, at different pixels **131** by focusing the scene image on detector **130** (method **200,** see **Figure 6** below).

**Figure 3** is an exemplary illustration of the efficiency of system **100** and method **200,** according to some embodiments of the invention. Graph **151** illustrates the frequency domain spectrum of the pixels of a car in scene **90,** with its engine off and on. Graph **151** indicates the clear and distinct vibration frequencies arising from turning the car engine on. Image **132** depicts the spatial distribution of the mean power spectral density of the detected vibrations in a specified frequency range 30-100Hz. Image **132** provides detailed information about the car and its vibrating parts. It is noted that the contours of the vehicle are clear although the image is grained.

The inventors note that the grained structure of image **132** results from the statistic distribution of the intensity in the speckle pattern. The speckle pattern created on the entrance pupil of optical system **120** is different for different scattering elements **91** in an object (such as a car, containing many scene elements **131**). Therefore, the entering and exiting of the speckle patterns corresponding to different elements **91** creates different signals on the corresponding camera pixel **131.** The inventors note that although grained, image **132** may still be used to identify objects that vibrate in an environment. Moreover, the effect of the graining may be diminished by illumination of the object from a number of directions by lasers **110,** which are not coherent with each other. In some embodiments, reduction of the graining may be carried out by sequential illumination of the object from various positions of laser **110.** In contrast to the regular filtering of the image, the described approach does not decrease the image resolution.

Therefore, in the de-focus regime, at least one coherent illumination source **110** may comprise a plurality of coherent illumination sources 110 which are not coherent with each other and have different directions of illumination with respect to elements **91** in the scene and/or at least one coherent illumination source **110** may be configured to sequentially illuminate elements **91** in the scene from different directions.

Vibrations image **132** may be used to allocate and use other vibration measurement methods, such as speckle interferometry to regions of the car, or generally of scene **90,** which are of special interest, e.g., scene elements **91** vibrating at specified frequencies and/or intensities, or exhibiting any other vibration characteristics.

**Figure 4** is a high level schematic illustration of mask **122,** according to some embodiments of the invention. In a non-limiting example of checkered mask **122,** the total edge length in the aperture stop area is increased, causing, under some configurations, a relative increase in modulation **141** with respect to DC **142.** Image **122A** illustrated a mask overlapping a speckle pattern to illustrate that movements of the latter result in overall intensity fluctuations. Due to non-symmetrical speckle structure the entrance of the single speckle into the open squares is not equal to the exiting part of the speckle during the speckle shift. Mask **122** may be designed and optimized with respect to a trade-off between increasing single edge crossings to enhance modulation **141** and avoiding multiple edge crossings (i.e., speckle pattern parts moving from one square to another square) which enhance DC **142.**

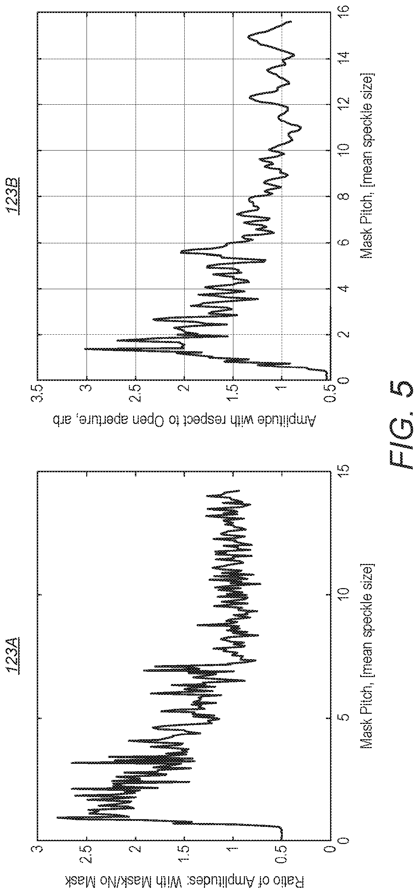

**Figure 5** is an exemplary illustration of simulation and experimental results concerning the effectivity and configuration of mask **122,** according to some embodiments of the invention. Graph **123A** illustrates simulation results (using simulated speckle patterns), averaged over multiple different speckle patterns, of the effect of mask pitch on the modulation amplitude. Generally, the range of mask pitch above about seven mean speckle sizes does not contribute to increase the modulation to DC ratio, while mask pitches between ca. 0.2-7 mean speckle sizes do increase the modulation to DC ratio, with optimal mask pitch around 1-3 mean speckle sizes. Clearly, this is a non-limiting example, at simulation conditions, yet it demonstrates the feasibility of the disclosed invention. Graph **123B** illustrates similar experimental results, which validate the simulation results shown in graph **123A.** It is noted that mathematical simulations and experiments were carried out to model the effect of various masks on the system's sensitivity, with good correspondence between simulations and experiments in that the speckle characteristics (speckle size, statistics) that enable the operation of system **100** meet the theoretical assumptions and in that a significant signal amplification (modulation to DC) was achieved with a checkered mask, reaching in experiments and simulations a factor of three.

In certain embodiments, coherent light source **110** may comprise a diverging, eye safe, laser, and optical unit **120** may comprise a camera at a corresponding wavelength range. System **100** may be configured to detect movements from the specific area of the detected vibrations, and may be used for non-destructive examination (e.g., of flying platforms, of electric transformers, of structures, etc.).

**Figure 6** is a high level list illustrating stages of a method **200**, according to some embodiments of the invention. The method stages may be carried out with respect to system **100** described above, which may be configured to implement method **200**. Method **200** may be at least partially implemented by at least one computer processor (not shown). Certain embodiments comprise computer program products comprising a computer readable storage medium having computer readable program embodied therewith and configured to carry out of the relevant stages of method **200.**

Method **200** comprises illuminating a scene by at least one coherent light source (stage **210**), focusing scattered light from the scene onto a pixelated detector to yield pixel intensity signals (stage **220**) and analyzing the pixel intensity signals over the pixels of the detector (stage **230**) to derive a vibration spectrum of elements in the scene that correspond to the pixels (stage **240**). Analyzing **240** may comprise Fourier transforming the pixel intensity signals (stage **242**) and analyzing vibration spectra over the pixels (stage **244**).

Method **200** may comprise identifying locations in the scene that correspond to pixels having specified vibration characteristics (such as spectrum, amplitude etc,) (stage **250**) and/or identifying at least one ROI according to the analyzed vibration spectrum (stage **252**).

Method **200** comprises enhancing the modulation of the pixel intensity signals using a spatially patterned mask in the optical unit (stage **260**) and configuring the spatially patterned mask to increase a ratio between the modulation of the pixel intensity signals and a DC thereof (stage **265**).

Method **200** may comprise de-focusing the scattered light upon a specified condition (stage **300**), e.g., with respect to identified locations or ROIs, and performing speckle interferometry on a received defocused signal (stage **305**), with respect to the identified ROIs or locations. Method **200** may further comprise carrying out illuminating **210** by a plurality of coherent illumination sources which are not coherent with each other and have different direction of illumination with respect to the elements in the scene and/or carrying out illuminating **210** sequentially from different directions (stage **302**).

Method **200** may comprise providing a vibrations image of the scene based on the pixel intensity signals (stage **310**) and, possibly simultaneously, speckle interferometry data concerning specific points in the scene (stage **320**). Method **200** may comprise scanning a plurality of points in the scene and applying speckle interferometry thereto, according to vibrations characteristics derived concurrently from the vibrations' image (stage **325**). Method **200** may comprise using the speckle interferometry data to improve the vibrations' image (stage **330**). Method **200** may comprise fusing a vibrations image based on the derived temporal spectra with a visual range image of the scene (stage **335**).

Method **200** may comprise inducing vibrations in at least one object in the scene (stage **340**), and correlating the pixel intensity signals with characteristics of the induced vibrations (stage **345**).

Method **200** may comprise correlating vibration data from different parts of at least one object in the scene to characterize a vibration pattern of the at least one object (stage **350**) and optionally identifying the at least one object according to the characterized vibration patterns across a surface of the at least one object (stage **355**).

Advantageously, system **100** and method **200** provide at the same time the in-focus picture of the scene and the vibration hot spots in the scene, and enable to find quickly the spots of strongest vibration amplitude. Optionally, system **100** may be programed to switch automatically among various positions of strongest vibrations and explore them practically simultaneously in real-time. Advantageously, system **100** and method **200** enable quick finding of the spots with predefined characteristics (such as amplitude level, frequency content etc.), may automatically switch to "de-focused" operation mode to improve the sensing quality while continuously updating the picture of vibrations in the overall scene and following their variation with time.

Aspects of the present invention are described above with reference to flowchart illustrations and/or portion diagrams of methods, apparatus (systems) and computer program products according to embodiments of the invention. It will be understood that each portion of the flowchart illustrations and/or portion diagrams, and combinations of portions in the flowchart illustrations and/or portion diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or portion diagram portion or portions.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or portion diagram portion or portions.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or portion diagram portion or portions.

The aforementioned flowchart and diagrams illustrate the architecture, functionality, and operation of possible implementations of systems, methods and computer program products according to various embodiments of the present invention. In this regard, each portion in the flowchart or portion diagrams may represent a module, segment, or portion of code, which comprises one or more executable instructions for implementing the specified logical function(s). It should also be noted that, in some alternative implementations, the functions noted in the portion may occur out of the order noted in the figures. For example, two portions shown in succession may, in fact, be executed substantially concurrently, or the portions may sometimes be executed in the reverse order, depending upon the functionality involved. It will also be noted that each portion of the portion diagrams and/or flowchart illustration, and combinations of portions in the portion diagrams and/or flowchart illustration, can be implemented by special purpose hardware-based systems that perform the specified functions or acts, or combinations of special purpose hardware and computer instructions.

In the above description, an embodiment is an example or implementation of the invention. The various appearances of "one embodiment", "an embodiment", "certain embodiments" or "some embodiments" do not necessarily all refer to the same embodiments. Although various features of the invention may be described in the context of a single embodiment, the features may also be provided separately or in any suitable combination. Conversely, although the invention may be described herein in the context of separate embodiments for clarity, the invention may also be implemented in a single embodiment. Certain embodiments of the invention may include features from different embodiments disclosed above, and certain embodiments may incorporate elements from other embodiments disclosed above.

Furthermore, it is to be understood that the invention can be carried out or practiced in various ways and that the invention can be implemented in certain embodiments other than the ones outlined in the description above.

The invention is not limited to those diagrams or to the corresponding descriptions. For example, flow need not move through each illustrated box or state, or in exactly the same order as illustrated and described. Meanings of technical and scientific terms used herein are to be commonly understood as by one of ordinary skill in the art to which the invention belongs, unless otherwise defined. While the invention has been described with respect to a limited number of embodiments, these should not be construed as limitations on the scope of the invention, but rather as exemplifications of some of the preferred embodiments. The scope of the invention should not be limited by what has thus far been described, but by the appended claims.

## Claims

1. A system (100) for imaging of vibrations in a scene, the system comprising:

   at least one coherent light source (110) configured to illuminate the scene comprising multiple scene elements,
   an optical unit (120) configured to focus light scattered from the multiple scene elements onto a pixelated detector (130) comprising multiple pixels such that light scattered from each scene element of the multiple scene elements is focused on a corresponding pixel of the multiple pixels on the pixelated detector,
   wherein the detector is configured to provide, for each pixel of the multiple pixels, a pixel intensity signal of the pixel thereof, to thereby yield corresponding multiple pixel intensity signals,
   wherein the optical unit further comprises a spatially patterned mask (122) configured to enhance a modulation of the pixel intensity signals and to increase a ratio between the modulation of the pixel intensity signals and a DC thereof, and
   a processing unit (150) configured to analyze each pixel intensity signal of the multiple pixel intensity signals and to derive, for each pixel of the multiple pixels and based on the respective pixel intensity signal, a vibration spectrum of the scene element in the scene that correspond to the pixel thereof, to thereby yield corresponding multiple vibration spectrums,
   wherein the processing unit is configured to optimize the spatial pattern of the mask according to specified criteria.

2. The system of claim 1, wherein the processing unit is configured to analyze the pixel intensity signals by analyzing respective temporal and frequency characteristics of the pixel intensity signals and to identify at least one ROI according to the analyzed temporal and frequency characteristics, and wherein the optical unit is further configured, upon a specified condition, to de-focus the scattered light and the processing unit is further configured to perform speckle interferometry on a received defocused signal, with respect to the identified at least one ROI.

3. The system of claim 2, wherein the at least one coherent illumination source comprises a plurality of coherent illumination sources which are not coherent with each other and have different directions of illumination with respect to the elements in the scene, and wherein the at least one coherent illumination source is configured to sequentially illuminate the elements in the scene from the different directions.

4. The system of any one of claims 1-3, wherein the processing unit is further configured to derive a vibrations' image from the analyzed pixel intensity signals.

5. The system of claim 4, wherein the processing unit is further configured to enhance the vibrations' image with speckle interferometry data.

6. The system of claim 4, wherein the processing unit is further configured to fuse the vibrations' image with a visual range and/or infrared image of the scene.

7. The system of any one of claims 1-6, further comprising a vibrations inducing module configured to induce vibrations in at least one object in the scene, wherein the processing unit is further configured to correlate the analyzed pixel intensity signals with characteristics of the induced vibration and to identify the at least one object according to vibration patterns across a surface of the at least one object, which are characterized according to the correlation

8. A method of imaging vibrations in a scene, the method comprising:

   illuminating the scene comprising multiple scene elements by at least one coherent light source (110), focusing light scattered from multiple scene elements in the scene onto a pixelated detector (130) comprising multiple pixels such that light scattered from each scene element of the multiple scene elements is focused on a corresponding pixel of the multiple pixels on the pixelated detector, to yield corresponding multiple pixel intensity signals,
enhancing a modulation of the pixel intensity signals using a spatially patterned mask (122) and configuring the spatially patterned mask to increase a ratio between the modulation of the pixel intensity signals and a DC thereof, and analyzing each pixel intensity signal of the multiple pixel intensity signals and deriving, for each pixel of the multiple pixels and based on the respective pixel intensity signal a vibration spectrum of the scene element in the scene that corresponds to the pixel thereof, thereby yielding corresponding multiple vibration spectrums.

9. The method of claim 8, wherein the analyzing comprises analyzing respective temporal and frequency characteristics of the pixel intensity signals, identifying at least one ROI according to the analyzed temporal and frequency characteristics and de-focusing the scattered light upon a specified condition, and performing speckle interferometry on a received defocused signal, with respect to the identified at least one ROI.

10. The method of claim 9, wherein the illuminating is carried out by a plurality of coherent illumination sources which are not coherent with each other and have different directions of illumination with respect to the elements in the scene and wherein the illuminating is carried out sequentially from the different directions.

11. The method of claim 9, further comprising providing, simultaneously, a vibrations image of the scene based on the analyzed pixel intensity signals and speckle interferometry data concerning specific points in the scene and scanning a plurality of points in the scene and applying speckle interferometry thereto, according to vibrations characteristics derived concurrently from the vibrations' image and using the speckle interferometry data to improve the vibrations' image.

12. The method of any one of claims 8-11, further comprising inducing vibrations in at least one object in the scene, and correlating the analyzed pixel intensity signals with characteristics of the induced vibration.

13. The method of claim 8, further comprising correlating analyzed pixel intensity signals from different parts of at least one object in the scene to characterize a vibration pattern of the at least one object and identifying the at least one object according to the characterized vibration pattern across a surface of the at least one object.

**Patentansprüche**

1. System (100) zur Bildgebung von Schwingungen in einer Szene, wobei das System Folgendes umfasst:

   mindestens eine kohärente Lichtquelle (110), die dazu konfiguriert ist, die Szene, die mehrere Szenenelemente umfasst, zu beleuchten, eine optische Einheit (120), die dazu konfiguriert ist, Licht, das von den mehreren Szenenelementen gestreut wird, auf einem pixelierten Detektor (130) zu fokussieren, welcher mehrere Pixel umfasst, derart, sodass Licht, das von jedem Szenenelement der mehreren Szenenelemente gestreut wird, auf einen entsprechenden Pixel von den mehreren Pixeln auf dem pixelierten Detektor fokussiert wird, wobei der Detektor dazu konfiguriert ist, für jedes Pixel von den mehreren Pixeln ein Pixel-Intensitätssignal der Pixel davon bereitzustellen, um dadurch mehrere entsprechende Pixel-Intensitätssignale zu erhalten, wobei die optische Einheit ferner eine räumlich gemusterte Maske (122) umfasst, die dazu konfiguriert ist, die Modulation der Pixel-Intensitätssignale zu verbessern und das Verhältnis zwischen der Modulation der Pixel-Intensitätssignale und einem GS davon zu erhöhen, und eine Verarbeitungseinheit (150), die dazu konfiguriert ist, jedes Pixel-Intensitätssignal der mehreren Pixel-Intensitätssignale zu analysieren und für jedes Pixel der mehreren Pixel und basierend auf dem jeweiligen Pixel-Intensitätssignal ein Schwingungsspektrum des Szenenelements in der Szene, das dem Pixel davon entspricht, abzuleiten, um dadurch mehrere entsprechende Schwingungsspektren zu erhalten, wobei die Verarbeitungseinheit dazu konfiguriert ist, das räumliche Muster der Maske nach festgelegten Kriterien zu optimieren.

2. System nach Anspruch 1, wobei die Verarbeitungseinheit dazu konfiguriert ist, die Pixel-Intensitätssignale durch Analysieren der jeweiligen Zeit- und Frequenzkennwerte der Pixel-Intensitätssignale zu analysieren und mindestens eine Region von Interesse (ROI) gemäß den analysierten Zeit- und Frequenzkennwerten zu identifizieren und wobei die optische Einheit ferner dazu konfiguriert ist, bei Vorliegen eines festgelegten Zustands das gestreute Licht zu defokussieren und die Verarbeitungseinheit ferner dazu konfiguriert ist, eine Speckle-Interferometrie an einem empfangenen defokussierten Signal in Bezug auf die mindestens eine ROI durchzuführen.

3. System nach Anspruch 2, wobei die mindestens eine kohärente Beleuchtungsquelle eine Vielzahl kohärenter Beleuchtungsquellen umfasst, die nicht miteinander kohärent sind und verschiedene Beleuchtungsrichtungen in Bezug auf die Elemente in der Szene haben und wobei die mindestens eine kohärente Beleuchtungsquelle dazu konfiguriert ist, die Elemente in der Szene aus verschiedenen Richtungen sequenziell zu beleuchten.

4.  System nach einem der Ansprüche 1-3, wobei die Verarbeitungseinheit ferner dazu konfiguriert ist, ein Abbild der Schwingungen aus den analysierten Pixel-Intensitätssignalen abzuleiten.

5.  System nach Anspruch 4, wobei die Verarbeitungseinheit ferner dazu konfiguriert ist, das Abbild der Schwingungen mit Speckle-Interferometriedaten zu verbessern.

6.  System nach Anspruch 4, wobei die Verarbeitungseinheit ferner dazu konfiguriert ist, das Abbild der Schwingungen mit einem visuellen Bereich und/oder Infrarot-Bild der Szene zu verschmelzen.

7.  System nach einem der Ansprüche 1-6, ferner umfassend ein Schwingungen auslösendes Modul, das dazu konfiguriert ist, bei mindestens einem Objekt in der Szene Schwingungen auszulösen, wobei die Verarbeitungseinheit ferner dazu konfiguriert ist, die analysierten Pixel-Intensitätssignale mit Kennwerten der ausgelösten Schwingung zu korrelieren und mindestens ein Objekt gemäß Schwingungsmustern über die Oberfläche des mindestens einen Objekts hinweg zu identifizieren, die gemäß der Korrelation gekennzeichnet sind.

8.  Verfahren zum Bildgeben von Schwingungen in einer Szene, wobei das Verfahren Folgendes umfasst:

    Beleuchten der Szene, die mehrere Szenenelemente umfasst, durch mindestens eine kohärente Lichtquelle (110),
    Fokussieren von Licht, das von mehreren Szenenelementen in der Szene gestreut wird, auf einem pixelierten Detektor (130),
    umfassend mehrere Pixel derart, sodass Licht, das an jedem Szenenelement der mehreren Szenenelemente gestreut wird, an einem entsprechenden Pixel von den mehreren Pixeln auf dem pixelierten Detektor fokussiert wird, um entsprechende Pixel-Intensitätssignale zu erhalten,
    Verbessern einer Modulation der Pixel-Intensitätssignale unter Verwendung einer räumlich gemusterten Maske (122) und
    Konfigurieren der räumlich gemusterten Maske, um ein Verhältnis zwischen der Modulation der Pixel-Intensitätssignale und einem GS davon zu erhöhen und
    Analysieren jedes Pixel-Intensitätssignals der mehreren Pixel-Intensitätssignale und Ableiten eines Schwingungsspektrums des Szenenelements in der Szene für jedes Pixel der mehreren Pixel und basierend auf dem jeweiligen Pixel-Intensitätssignal, das dem Pixel davon entspricht, wodurch mehrere entsprechende Schwingungsspektren erhalten werden.

9.  Verfahren nach Anspruch 8, wobei das Analysieren ein Analysieren der jeweiligen Zeit- und Frequenzkennwerte der Pixel-Intensitätssignale umfasst, ein Identifizieren von mindestens einer ROI gemäß den analysierten Zeit- und Frequenzkennwerten und bei Vorliegen eines festgelegten Zustands ein Defokussieren des gestreuten Lichts und ein Durchführen von Speckle-Interferometrie an einem empfangenen defokussierten Signal in Bezug auf die mindestens eine ROI.

10. Verfahren nach Anspruch 9, wobei das Beleuchten von einer Vielzahl kohärenter Beleuchtungsquellen, die nicht miteinander kohärent sind und verschiedene Beleuchtungsrichtungen in Bezug auf die Elemente der Szene haben, durchgeführt wird und wobei die Beleuchtung aus den verschiedenen Richtungen sequenziell durchgeführt wird.

11. Verfahren nach Anspruch 9, ferner umfassend ein gleichzeitiges Bereitstellen eines Schwingungsabbildes der Szene, das auf den analysierten Pixel-Intensitätssignalen und Speckle-Interferometriedaten in Bezug auf spezifische Punkte in der Szene basiert, und ein Scannen einer Vielzahl von Punkten in der Szene und ein Anwenden von Speckle-Interferometrie hierauf gemäß Schwingungskennwerten, die zugleich von dem Abbild der Schwingungen abgeleitet werden und ein Anwenden der Speckle-Interferometriedaten, um das Abbild der Schwingungen zu verbessern.

12. Verfahren nach einem der Ansprüche 8-11, ferner umfassend ein Auslösen von Schwingungen bei mindestens einem Objekt in der Szene und ein Korrelieren der analysierten Pixel-Intensitätssignale mit Kennwerten der ausgelösten Schwingung.

13. Verfahren nach Anspruch 8, ferner umfassend ein Korrelieren von analysierten Pixel-Intensitätssignalen von verschiedenen Teilen mindestens eines Objekts in der Szene, um ein Schwingungsmuster des mindestens einen Objekts zu kennzeichnen, und ein Identifizieren des mindestens einen Objekts gemäß dem gekennzeichneten Schwingungsmuster über eine Oberfläche des mindestens einen Objekts hinweg.

**Revendications**

1. Système (100) d'imagerie des vibrations dans une scène, le système comprenant :

   au moins une source de lumière cohérente (110) configurée pour éclairer la scène comprenant plusieurs éléments de scène,
   une unité optique (120) configurée pour focaliser la lumière diffusée depuis les multiples éléments de la scène
   sur un détecteur pixélisé (130) comprenant de multiples pixels de manière à ce que la lumière diffusée à partir de chaque élément de scène des multiples éléments de scène soit focalisée sur un pixel correspondant des multiples pixels sur le détecteur pixélisé,
   le détecteur étant configuré pour fournir, pour chaque pixel des multiples pixels, un signal d'intensité de pixel dudit pixel, afin de produire de multiples signaux d'intensité de pixel correspondants,
   dans lequel l'unité optique comprend en outre un masque à motifs spatiaux (122) configuré pour améliorer une modulation des signaux d'intensité de pixel et pour augmenter un rapport entre la modulation des signaux d'intensité de pixel et un courant continu de ceux-ci, et
   une unité de traitement (150) configurée pour analyser chaque signal d'intensité de pixel des multiples signaux d'intensité de pixel et pour en déduire, pour chaque pixel des multiples pixels en fonction du signal d'intensité de pixel respectif, un spectre de vibrations de l'élément de scène dans la scène qui correspond à son pixel, afin de produire de multiples spectres de vibrations correspondants,
   dans lequel l'unité de traitement est configurée pour optimiser le motif spatial du masque selon des critères spécifiés.

2. Système selon la revendication 1, dans lequel l'unité de traitement est configurée pour analyser les signaux d'intensité de pixel en analysant les caractéristiques temporelles et fréquentielles respectives des signaux d'intensité de pixel et pour identifier au moins une région d'intérêt (ROI) selon les caractéristiques temporelles et fréquentielles analysées, et dans lequel l'unité optique est en outre configurée, en fonction d'une condition spécifiée, pour défocaliser la lumière diffusée et l'unité de traitement est en outre configurée pour effectuer une interférométrie de speckle sur un signal défocalisé reçu, par rapport à l'au moins une ROI identifiée.

3. Système selon la revendication 2, dans lequel l'au moins une source d'éclairage cohérente comprend une pluralité de sources d'éclairage cohérentes qui ne sont pas cohérentes entre elles et ont des directions d'éclairage différentes par rapport aux éléments de la scène, et dans lequel l'au moins une source d'éclairage cohérente est configurée pour éclairer séquentiellement les éléments de la scène depuis différentes directions.

4. Système selon l'une quelconque des revendications 1 à 3, dans lequel l'unité de traitement est en outre configurée pour déduire une image de vibrations à partir des signaux d'intensité de pixel analysés.

5. Système selon la revendication 4, dans lequel l'unité de traitement est en outre configurée pour améliorer l'image des vibrations avec des données d'interférométrie de speckle.

6. Système selon la revendication 4, dans lequel l'unité de traitement est en outre configurée pour fusionner l'image des vibrations avec une plage visuelle et/ou une image infrarouge de la scène.

7. Système selon l'une quelconque des revendications 1 à 6, comprenant en outre un module d'induction de vibrations configuré pour induire des vibrations dans au moins un objet de la scène, dans lequel l'unité de traitement est en outre configurée pour corréler les signaux d'intensité de pixel analysés avec les caractéristiques de la vibration induite et pour identifier l'au moins un objet selon des modèles de vibrations sur toute la surface d'au moins un objet, qui sont caractérisés selon la corrélation.

8. Procédé d'imagerie des vibrations dans une scène, le procédé consistant à :

   éclairer la scène comprenant plusieurs éléments de scène au moyen d'au moins un élément d'une source de lumière cohérente (110), focaliser la lumière diffusée depuis plusieurs éléments de la scène sur un détecteur pixelisé (130) comprenant de multiples pixels de manière à ce que la lumière diffusée depuis chaque élément de scène des multiples éléments de scène soit focalisée sur un pixel correspondant des multiples pixels sur le détecteur pixélisé, afin de produire de multiples signaux d'intensité de pixels correspondants,
   améliorer une modulation des signaux d'intensité de pixel en utilisant un masque à motifs spatiaux (122) et configurer le masque à motifs spatiaux afin d'augmenter un rapport entre la modulation des signaux d'intensité de pixel et un courant continu de celui-ci, et
   analyser chaque signal d'intensité de pixel des multiples signaux d'intensité de pixel et en déduire, pour chaque pixel des multiples pixels et en fonction du signal d'intensité de pixel respectif, un spectre de vibrations de l'élément de scène dans la scène qui correspond à son pixel, donnant ainsi de multiples spectres de vibrations correspondants.

9. Procédé selon la revendication 8, dans lequel l'analyse comprend l'analyse des caractéristiques temporelles et fréquentielles respectives des signaux d'intensité de pixel, l'identification d'au moins une ROI selon les caractéristiques temporelles et fréquentielles analysées et la défocalisation de la lumière diffusée en fonction d'une condition spécifiée, et la réalisation d'une interférométrie de speckle sur un signal défocalisé reçu, par rapport à l'au moins une ROI identifiée.

10. Procédé selon la revendication 9, dans lequel l'éclairage est réalisée par une pluralité de sources d'éclairage cohérentes qui ne sont pas cohérentes entre elles et ont des directions d'éclairage différentes par rapport aux éléments de la scène et dans laquelle l'éclairage est effectué séquentiellement depuis différentes directions.

11. Procédé selon la revendication 9, consistant en outre à fournir, simultanément, une image des vibrations de la scène basée sur les signaux d'intensité de pixel analysés et les données d'interférométrie de speckle concernant des points spécifiques dans la scène et à balayer une pluralité de points dans la scène en les soumettant à une interférométrie de speckle, selon des caractéristiques de vibrations dérivées simultanément de l'image des vibrations, et en utilisant les données d'interférométrie de speckle afin d'améliorer l'image des vibrations.

12. Procédé selon l'une quelconque des revendications 8 à 11, consistant en outre à induire des vibrations dans au moins un objet de la scène, et à corréler les signaux d'intensité de pixel analysés avec les caractéristiques de la vibration induite.

13. Procédé selon la revendication 8, consistant en outre à corréler les signaux d'intensité de pixel analysés provenant de différentes parties d'au moins un objet dans la scène afin de caractériser un motif de vibration de l'au moins un objet et à identifier l'au moins un objet selon le motif de vibration caractérisé sur toute la surface de l'au moins un objet.

FIG. 1A

FIG. 1B

$O(y(t))$

*91*

*92*

*93*

Laser

*94*

Camera

Speckle pattern

*92*

Scene element not in focus

Multiple pixels

*80* — Scanning the scene (de-focused), element for element, and analyzing consecutive speckle patterns

## FIG. 2A
*Prior art*

*90*

*92*

*130*

*110*

*91*

*200* — Imaging the scene (focused), integrating speckle patterns and analyzing the pixel intensity signals

## FIG. 2B

EP 3 504 524 B1

FIG. 3

122

122A

FIG. 4

EP 3 504 524 B1

*FIG. 5*

<u>200</u>

Illuminating a scene by at least one coherent light source |~210

Focusing scattered light from the scene onto a pixelated detector to yield pixel intensity signals |~220

Analyzing the pixel intensity signals over the pixels of the detector |~230

Deriving a vibration spectrum of elements in the scene that correspond to the pixels |~240

Fourier transforming the pixel intensity signals |~242

Analyzing the vibration spectrum over the pixels |~244

Identifying locations in the scene that correspond to pixels having specified vibration characteristics |~250

Identifying ROI(s) according to the analyzed vibration spectrum |~252

Enhancing the modulation of the pixel intensity signals using a spatially patterned mask |~260

Configuring the spatially patterned to increase a ratio between the modulation of the pixel intensity signals and a DC thereof |~265

*FIG. 6*

| De-focusing the scattered light upon a specified condition, e.g., with respect to identified locations or ROIs | ~300 |

| Carry out the illumination by multiple mutually incoherent sources and/or sequentially | ~302 |

| Performing speckle interferometry on a received defocused signal | ~305 |

| Providing a vibrations' image of the scene based on the pixel intensity signals | ~310 |

| Providing, simultaneously, the vibrations' image and speckle interferometry data concerning specific points in the scene | ~320 |

| Scanning multiple points in the scene and applying speckle interferometry thereto, according to vibrations characteristics derived concurrently from the vibrations' image | ~325 |

| Using the speckle interferometry data to improve the vibrations' image | ~330 |

| Fusing the vibrations' image with a visual range and/or an infrared image of the scene | ~335 |

| Inducing vibrations in object(s) in the scene | ~340 |

| Correlating the pixel intensity or the analyzed frequencies with the characteristics of the induced vibrations | ~345 |

| Correlating vibration data from different parts of object(s) in the scene to characterize a vibration pattern of the object(s) | ~350 |

| Identifying the object(s) according to the characterized vibration patterns across their surface | ~355 |

*FIG. 6* Cont'd

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005160822 A
- WO 9838476 A

- US 2006209631 A

**Non-patent literature cited in the description**

- **ZALEVSKY et al.** Simultaneous remote extraction of multiple speech sources and heart beats from secondary speckles pattern. *Optics express,* 2009, vol. 17 (24), 21566-21580